(19) Europäisches Patentamt
European Patent Office
Office européen des brevets

(11) Publication number: **0 494 613 A2**

(12) # EUROPEAN PATENT APPLICATION

(21) Application number: **92100084.0**

(22) Date of filing: **04.01.92**

(51) Int. Cl.5: **C08K 5/50**, C08G 63/692, C08G 63/78

(30) Priority: **09.01.91 JP 11613/91**
**05.07.91 JP 191214/91**

(43) Date of publication of application:
**15.07.92 Bulletin 92/29**

(84) Designated Contracting States:
**DE FR GB IT**

(71) Applicant: **TEIJIN LIMITED**
**6-7, Minamihonmachi 1-chome Chuo-ku**
**Osaka-shi Osaka 541(JP)**

(72) Inventor: **Saiki, Noritsugu**
**2750-1-46, Minamiyashida-cho**
**Matsuyama-shi, Ehime(JP)**
Inventor: **Sasaki, Noriaki**
**3-9-211, Minohara**
**Ibaraki-shi, Osaka(JP)**

(74) Representative: **Hoeger, Stellrecht & Partner**
**Uhlandstrasse 14 c**
**W-7000 Stuttgart 1(DE)**

(54) **Polyester dyeable with acid dye and process for preparation thereof.**

(57) A polyester dyeable with an acid dye comprising an aromatic dicarboxylic acid as the main acid component and an aliphatic diol and/or an alicyclic glycol as the main glycol component, wherein units of a quaternary phosphonium base represented by the following formula (I) are incorporated in an amount of 5 x $10^{-4}$ to 5 x $10^{-2}$ mole per 100 g of the polyester:

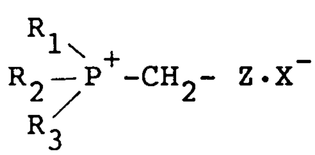

(I)

wherein $R_1$, $R_2$ and $R_3$ may be the same or different and each represents a hydrocarbon group, Z represents $-R_4-CH_2-P^+R_1R_2R_3 \cdot X^-$ in which $R_1$, $R_2$ and $R_3$ are as defined above, and $R_4$ represents a hydrocarbon group having 2 to 14 carbon atoms, or a hydrocarbon group having 2 to 5 carbon atoms, which is bonded to the polyester through at least one ester bond, and $X^-$ represents a sulfonate anion.

EP 0 494 613 A2

## BACKGROUND OF THE INVENTION

### (1) Field of the Invention

The present invention relates to a polyester dyeable with an acid dye, and a process for the preparation thereof. More particularly, the present invention relates to an acid dye-dyeable polyester comprising a specific amount of units having a quaternary phosphonium base having a specific structure, which shows a good dyeability with an acid dye and an excellent whiteness, light fastness and washing resistance, and a process for the preparation thereof.

### (2) Description of the Related Art

As is well known, a polyester, especially polyethylene terephthalate (sometimes referred to as "PET" hereinafter), has excellent properties, and therefore, the polyester is widely used in various fields.

In the field of fibers, however, if a polyester fiber that can be dyed with an acid dye exists, there can be adopted, for example, a method in which three kinds of fabrics are prepared by using cationic dye-dyeable PET, ordinary PET and acid dye-dyeable PET, and these fabrics are dyed into different colors by one dyeing operation. Furthermore, if an acid dye-dyeable polyester fiber is mix-spun with wool, the fabric can be dyed only with an acid dye. Thus, various advantages are attained in many application fields.

In view of the foregoing, various attempts have been made to impart a dyeability with an acid dye to a polyester, but in most of these attempts, amine compounds are copolymerized or blended, and therefore, the obtained polymers are easily colored and have a poor light resistance. Accordingly, these polyesters are not practically used.

As another process for preparing a polyester dyeable with an acid dye, for example, Japanese Examined Patent Publication No. 44-32302 proposes a process in which a quaternary phosphonium compound is incorporated, but the polyester prepared according to this process is dyeable not only with an acid dye but also with a cationic dye. Accordingly, when three fabrics differing in color are prepared by using a PET dyeable with a cationic dye, the PET dyeable with an acid dye and an ordinary PET, only a mingled color is obtained and sharp colors can not be obtained.

The above-mentioned patent publication discloses a process using a mono-quaternary phosphonium compound represented by formula $[R_1R_2R_3R_4P]X$. In the specifically disclosed compounds, if the molecular weight is low, the washing fastness is poor, and if the molecular weight is high, the compatibility or affinity with a polyester is low, and therefore, the obtained dyed fabric has a poor brightness and the washing fastness (non-staining property, dry cleaning resistance or the like) is poor.

Furthermore, a polyester copolymerized with a quaternary phosphonium compound is proposed in the specification of U.S. Patent No. 4,855,396. Because the proposed polyester comprises, as the copolymerization component, a quaternary phosphonium compound having an ester-forming functional group introduced into the aryl group bonded directly to the phosphorus atom, under high-temperature melt-polymerization conditions at a temperature higher than 280°C, i.e., conditions customarily adopted for polymerization of PET, the polyester is easily colored a yellowish brown. Accordingly, in the process disclosed in this U.S. patent, the polymerization must be carried out at a relatively low temperature such as 240°C, and the whiteness is still poor. Moreover, the disclosed polyester is used for a toner, and use of the polyester for a fiber is not intended, and thus it is deemed that a satisfactory fiber cannot be obtained.

## SUMMARY OF THE INVENTION

An object of the present invention is to give a dyeability with an acid dye to a polyester represented by PET. Another object of the present invention is to provide a polyester in which coloration of the polymer can be controlled and which has an excellent light resistance and washing fastness.

The present inventors searched for a quaternary phosphonium salt compound having a reduced coloration even at a polyester-melting temperature as high as 280°C, and dyeable only with an acid dye but having a poor affinity with a cationic dye, and as a the result, it was found that the above-mentioned objects can be attained by incorporating a quaternary phosphonium base having a specific structure in a specific amount into a polyester. The present invention was based on this finding.

More specifically, in accordance with one aspect of the present invention, there is provided a polyester dyeable with an acid dye, which comprises an aromatic dicarboxylic acid as the main acid component and an aliphatic diol and/or an alicyclic glycol as the main glycol component, wherein units of a quaternary phosphonium base represented by the following general formula (I) is incorporated in an amount of 5 x

$10^{-4}$ to $5 \times 10^{-2}$ mole per 100 g of the polyester:

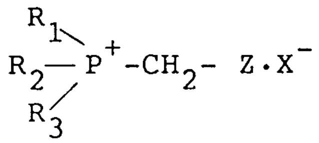

(I)

wherein $R_1$, $R_2$ and $R_3$ may be the same or different and each represents a hydrocarbon group, Z represents $-R_4-CH_2-P^+R_1R_2R_3 \cdot X^-$ in which $R_1$, $R_2$ and $R_3$ are as defined above, and $R_4$ represents a hydrocarbon group having 2 to 14 carbon atoms, or a hydrocarbon group having 2 to 5 carbon atoms, which is bonded to the polyester through at least one ester bond, and $X^-$ represents a sulfonate anion.

In accordance with another aspect of the present invention, there is provided a process for the preparation of a polyester dyeable with an acid dye, which comprises forming the polyester by using an aromatic dicarboxylic acid and/or an ester-forming derivative thereof as the main dicarboxylic acid component with an aliphatic diol and/or an alicyclic diol and/or an ester forming derivative thereof as the main glycol component, wherein a quaternary phosphonium compound represented by the following general formula (V) and/or (VI) is added in an amount of $5 \times 10^{-4}$ to $5 \times 10^{-2}$ mole per 100 g of the obtained polyester before completion of the polyester-forming reaction, and then the reaction is completed:

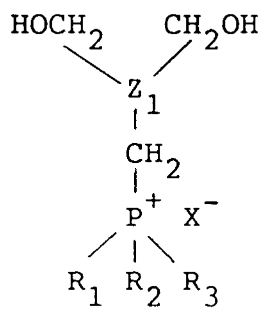

(V)

and/or

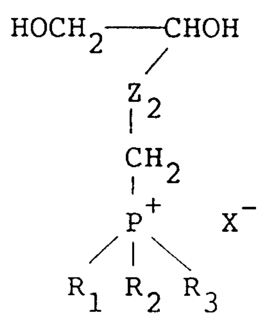

(VI)

wherein $Z_1$ represents a trivalent saturated hydrocarbon group having 1 to 3 carbon atoms, $Z_2$ represents a divalent saturated hydrocarbon group having 1 to 3 carbon atoms or a direct bond, $R_1$, $R_2$ and $R_3$ may be the same or different and each represents a hydrocarbon group having 1 to 6 carbon atoms, and $X^-$ represents a sulfonate anion.

In accordance with still another aspect of the present invention, there is provided a process for the preparation of a polyester dyeable with an acid dye, which comprises forming the polyester by using an aromatic dicarboxylic acid and/or an ester-forming derivative thereof as the main dicarboxylic acid component with an aliphatic diol and/or an alicyclic diol and/or an ester-forming derivative thereof as the main glycol component, wherein a quaternary phosphonium compound represented by the following general formula (VII) and/or (VIII) is added in an amount of $5 \times 10^{-4}$ to $5 \times 10^{-2}$ mole per 100 g of the obtained polyester before completion of the polyester-forming reaction, and then the reaction is completed:

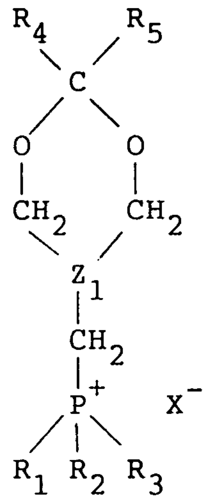

(VII)

and/or

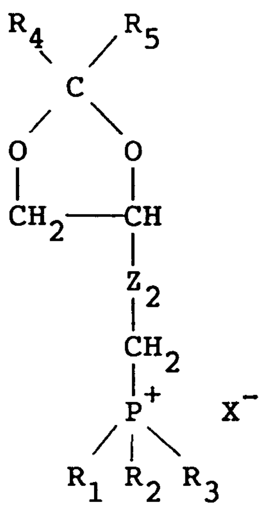

(VIII)

wherein $Z_1$ represents a trivalent saturated hydrocarbon group having 1 to 3 carbon atoms, $Z_2$ represents a divalent saturated hydrocarbon group having 1 to 3 carbon atoms or a direct bond, $R_1$, $R_2$ and $R_3$ may be the same or different and each represents a hydrocarbon group having 1 to 6 carbon atoms, $R_4$ and $R_5$ represent a hydrogen atom or a hydrocarbon group having 1 to 4 carbon atoms, with the proviso that at least one of them is the hydrocarbon group, or $R_4$ and $R_5$ are alkylene groups having 4 through 8 carbon atoms, which are bonded together to form a 5- to 7-membered ring, and $X^-$ represents a sulfonate anion.

DESCRIPTION OF THE PREFERRED EMBODIMENTS

The polyester of the present invention is a polymer comprising an aromatic dicarboxylic acid as the main acid component and an aliphatic diol and/or an alicyclic diol as the main glycol component, obtained by polycondensing an aromatic dicarboxylic acid and/or an ester-forming derivative thereof with an aliphatic diol and/or an alicyclic diol and/or an ester-forming derivative thereof.

As the aromatic dicarboxylic acid, there can be mentioned terephthalic acid, isophthalic acid, orthophthalic acid, 2,6-naphthalene-dicarboxylic acid, 2,7-naphthalene-dicarboxylic acid, 2,5-naphthalene-dicarboxylic acid, 1,5-naphthalene-dicarboxylic acid, 4,4'-diphenyl-dicarboxylic acid, 3,3'-diphenyl-dicarboxylic acid, 4,4'-diphenylether-dicarboxylic acid, 4,4'-diphenylmethane-dicarboxylic acid, 4,4'-diphenylsulfone-dicarboxylic acid and 1,2-bis(phenoxy)ethane-4,4'-dicarboxylic acid. Of these aromatic dicarboxylic acids, terephthalic acid is especially preferably used.

These aromatic dicarboxylic acids can be used in the form of a mixture of two or more of them. Moreover, a small amount of at least one member selected from aliphatic dicarboxylic acids such as adipic acid, azelaic acid, sebacic acid and dodecadionic acid can be used in combination with the aromatic dicarboxylic acid.

As the aliphatic diol compound, there can be mentioned, for example, ethylene glycol, propane-diol, butane-diol, hexane-diol, neopentyl glycol, 2-methyl-1,3-propane-diol, diethylene glycol and triethylene glycol. As the alicyclic diol compound, there can be mentioned, for example, 1,4-cyclohexane-diol and 1,4-cyclohexane-dimethanol. Of these diol compounds, ethylene glycol and 1,4-butane-diol are especially preferably used. These glycol components can be used in the form of a mixture of two or more thereof. Furthermore, a small amount of a polyoxyalkylene glycol having both terminals or one terminal blocked can be copolymerized together with the diol compound.

Moreover, a polycarboxylic acid such as trimellitic acid or pyromellitic acid, or a polyol such as glycerol, trimethylol-propane or pentaerythritol can be used, as long as the formed polyester is substantially linear.

The polyester of the present invention can be prepared by an optional process. For example, in the case of polyethylene terephthalate, terephthalic acid is subjected to an esterification with ethylene glycol or the like, a lower alkyl ester of terephthalic acid such as dimethyl terephthalate is subjected to an ester exchange reaction with ethylene glycol, or terephthalic acid is reacted with ethylene oxide, whereby the first stage reaction of forming a glycol ester of terephthalic acid and/or a low polymer thereof is obtained. Then, the second stage reaction of polycondensing the reaction product of the first stage by heating under a reduced pressure until a desired polymerization degree is attained, is obtained, whereby the polyester is prepared.

In the polyester of the present invention, it is indispensable that units represented by the following general formula (I) be contained in the above-mentioned polyester:

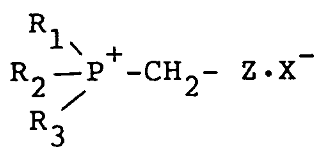

(I)

wherein $R_1$ , $R_2$ and $R_3$ may be the same or different and each represents a hydrocarbon group, Z represents $-R_4-CH_2-P^+R_1R_2R_3 \cdot X^-$ in which $R_1$ , $R_2$ and $R_3$ are as defined above, and $R_4$ represents a hydrocarbon group having 2 to 14 carbon atoms, or a hydrocarbon group having 2 to 5 carbon atoms, which is bonded to the polyester through at least one ester bond, and $X^-$ represents a sulfonate anion.

Where units having a quaternary phosphonium base are not copolymerized but the quaternary phosphonium base is incorporated in the polyester, preferably a quaternary phosphonium compound represented by the following formula (II) is incorporated, and where units having a quaternary phosphonium base are copolymerized, preferably units represented by the general formula (III) or (IV) described hereinafter are copolymerized:

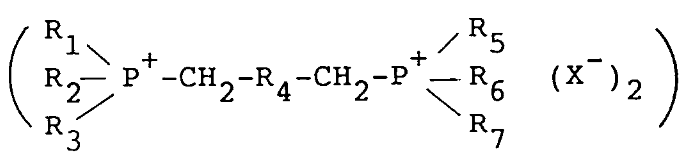

(II)

In the above-mentioned formula (II), $R_1$ , $R_2$ , $R_3$ , $R_5$ , $R_6$ and $R_7$ represent a monovalent hydrocarbon group having 4 to 10 carbon atoms. Specifically, there can be mentioned a phenyl group and a butyl group, and a phenyl group is especially preferred because the dispersibility in the polyester is improved and the dyeing brightness is increased. If the number of carbon atoms is smaller than 4, the quaternary phosphonium compound is readily split at the dyeing treatment and the durability of the dyeing (non-staining property, dry cleaning resistance, migration resistance or the like) is lowered. If the number of carbon atoms is larger than 10, the compatibility with the polyester is reduced, and the color brightness of the dyed fabric is reduced. Moreover, the amount of the quaternary phosphonium compound necessary for dyeing at the same density increases and the moldability of the polyester or the physical property (fibrilation resistance, alkali resistance or the like) of the molded article is poor and satisfactory results can not be obtained.

In the above-mentioned formula (II), $R_4$ represents a hydrocarbon group having 2 to 14 carbon atoms, and a linear polymethylene group or a linear polymethylene group in which parts of hydrogen atoms are substituted with methyl groups is preferred. More specifically, there can be mentioned $-(CH_2)_2-$, $-(CH_2)_4-$, $-(CH_2)_8-$, $-(CH_2)_{10}-$, $-(CH_2)_{14}$ and $-CH_2CH(CH_3)CH_2-$, and $-(CH_2)_8-$and $-(CH_2)_{10}-$ are especially preferred.

In the formula (II), X is a sulfonnic acid residue represented by $RSO_3-$, and a methane-sulfonate anion and a p-toluene-sulfonate anion are preferred. Especially in the case of a methane-sulfonate anion, the compatibility with PET is improved and the brightness of the dyeing is increased.

The above-mentioned quaternary phosphonium compound is prepared, for example, in the following manner. More specifically, a diol compound such as hexane-diol or decane-diol is reacted with a sulfonic acid chloride such as p-toluene-sulfonic acid chloride in the presence of a tertiary amine to form a disulfonic acid ester, and the disulfonic acid ester is reacted with a phosphine compound such as triphenylphosphine or tributylphosphine at a temperature higher than 100 °C, whereby the intended quaternary phosphonium compound can be easily obtained.

As the quaternary phosphonium compound preferably used, the following compounds can be mentioned:

$Ph_3P^+(CH_2)_{10}P^+Ph_3 \cdot (CH_3SO_3^-)_2$ ,

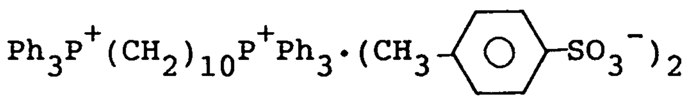 ,

$Bu_3P^+(CH_2)_{10}P^+Bu_3 \cdot (CH_3SO_3^-)_2$ ,
$Ph_3P^+(CH_2)_{12}P^+Ph_3 \cdot (CH_3SO_3^-)_2$ ,
$Bu_3P^+(CH_2)_6P^+Bu_3 \cdot (CH_3SO_3^-)_2$ ,

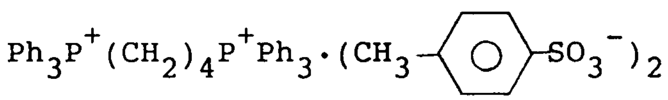 , and

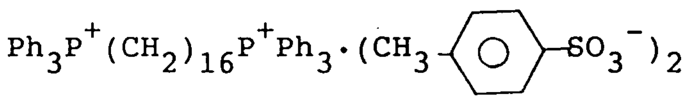 .

These compounds can be used singly or in the form of a mixture of two or more thereof.

Of these compounds are especially preferably used
$Ph_3P^+(CH_2)_{10}P^+Ph_3 \cdot (CH_3SO_3^-)_2$ , and
$Ph_3P^+(CH_2)_{12}P^+Ph_3 \cdot (CH_3SO_3^-)_2$ ,
because they show a good compatibility with polyethylene terephthalate and have a good heat resistance and a good affinity with an acid dye, and a bright dyeing can be easily obtained.

The quaternary phosphonium compound should be incorporated into the polyester so that the quaternary phosphonium group is present in an amount of $5 \times 10^{-4}$ to $5 \times 10^{-2}$ mole, preferably $1 \times 10^{-3}$ to $2 \times 10^{-2}$ mole, per 100 g of the polyester. If the amount incorporated of the quaternary phosphonium group exceeds $5 \times 10^{-2}$ mole, the dyeability with an acid dye is saturated and a further improvement is attained but the physical properties of the polyester are relatively poor. If the amount incorporated is smaller than $5 \times 10^{-4}$ mole, the dyeability with an acid dye is insufficient, and the objects of the present invention cannot be attained.

The incorporation of the quaternary phosphonium compound can be performed at an optional stage before formation of the polyester. For example, the quaternary phosphonium compound can be incorporated in polyester-forming materials before initiation of the first stage reaction of the synthesis of the polyester, or can be added during the period of from a termination of the first stage reaction to an initiation of the second stage reaction, or during the second stage reaction. Alternatively, the quaternary phosphonium compound can be added when the polyester is melt and formed into a fiber or the like. Preferably, the quaternary phosphonium compound is added after initiation of the second stage of the polyester-synthesizing reaction, especially after the intrinsic viscosity of the polyester arrives at a level of at least 0.3, because the time of exposure of the quaternary phosphonium compound to a high-temperature atmosphere becomes short and the hue of the obtained polyester is good.

As pointed out hereinbefore, where units having a quaternary phosphonium base are copolymerized

with the polyester, preferably the units are those represented by the following formula (III) or (IV):

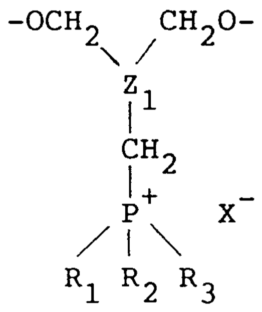

(III)

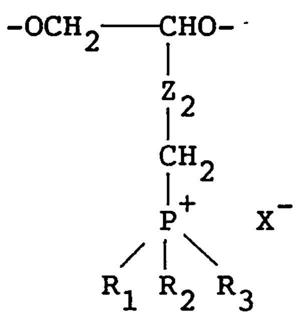

(IV)

In the above-mentioned formulae, $Z_1$ represents a trivalent hydrocarbon group having 1 to 3 carbon atoms, and as specific examples, there can be mentioned the following groups:

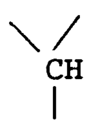 , 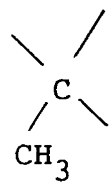 and 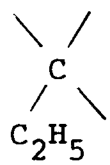 .

In the above-mentioned formulae, $Z_2$ represents a divalent hydrocarbon group having 1 to 3 carbon atoms, or a direct bond, and $R_1$ , $R_2$ and $R_3$ may be the same or different and each represent a member selected from the group consisting of hydrocarbon groups having 1 to 6 carbon atoms. As specific examples, there can be mentioned a phenyl group, a butyl group, a propyl group, an ethyl group and a methyl group. From the viewpoint of an easy availability thereof, a phenyl group and a butyl group are preferred. Furthermore, $X^-$ represents a sulfonate anion.

The amount copolymerized of units having the above-mentioned quaternary phosphonium group should be $5 \times 10^{-4}$ to $5 \times 10^{-2}$ mole, preferably $2.5 \times 10^{-3}$ to $2.5 \times 10^{-2}$ mole, especially preferably $4 \times 10^{-3}$ to $1.5 \times 10^{-2}$ mole, per 100 g of the obtained polyester. If the amount copolymerized exceeds $5 \times 10^{-2}$ mole, no further improvement of the dyeability with an acid dye can be attained but the physical properties of the polyester are relatively poor. If the amount copolymerized is smaller than $5 \times 10^{-4}$ mole, the dyeability with an acid dye is insufficient, and the objects of the present invention can not be satisfactorily attained.

The quaternary phosphonium compounds used for the production of the polyester of the present invention can be represented by the following formulae (V) through (VIII):

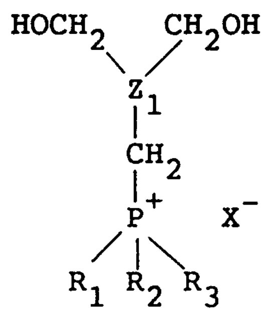

(V),

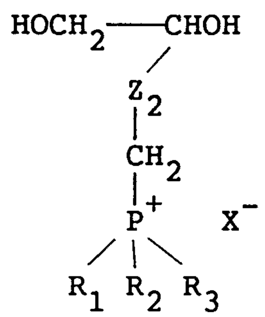

(VI),

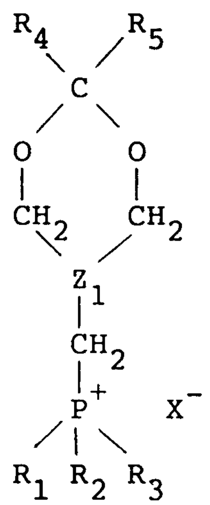

(VII), and

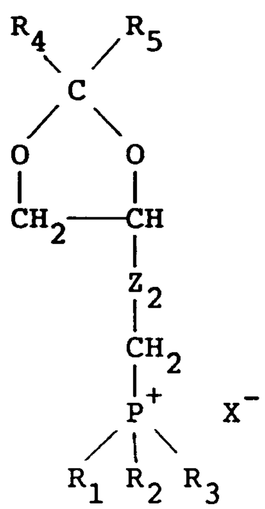

(VIII).

In the formulae, $Z_1$, $Z_2$, $R_1$, $R_2$, $R_3$ and $X^-$ are as defined above, $R_4$ and $R_5$ represent a hydrogen atom or a hydrocarbon group having 1 to 4 carbon atoms, with the proviso that at least one thereof is the hydrocarbon group, or $R_4$ and $R_5$ are alkylene groups having 4 to 8 carbon atoms, which are bonded together to form a 5-to 7-membered ring, and $X^-$ is a sulfonate anion.

The quaternary phosphonium compound is prepared, for example, in the following manner. Namely, the two hydroxyl groups of a triol such as 1,1,1-trimethylolpropane or glycerol are converted to an acetal or ketal according to a conventional method (for example, see Organic Synthesis, vol. 3, page 502), and the acetal or ketal is reacted with a sulfonic acid chloride in a tertiary amine to obtain a monosulfonic acid ester. Then, the monosulfonic acid ester is heat-reacted with a phosphine such as triphenylphosphine or tributylphosphine at a temperature higher than 100°C to obtain an intended quaternary phosphonium compound. The obtained quaternary phosphonium compound is an acetal or ketal represented by the above-mentioned general formula (VII) or (VIII). This acetal or ketal can be hydrolyzed to form a diol compound represented by the general formula (V) or (VI).

As preferred examples of the quaternary phosphonium compound, there can be mentioned the following compounds:

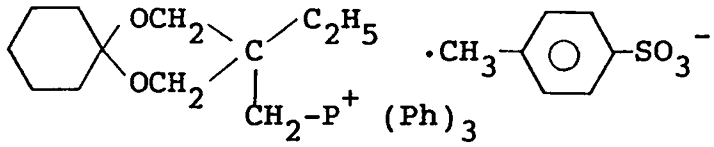 ,

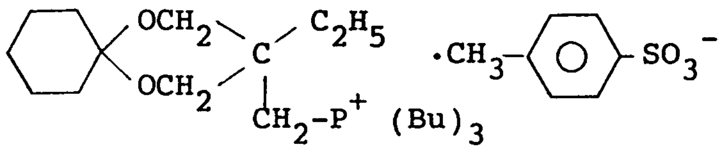 ,

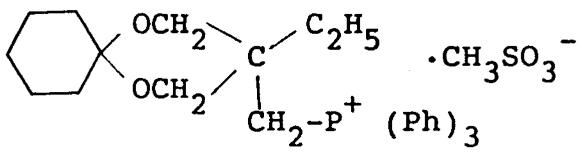 ,

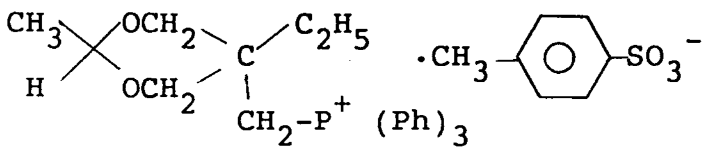 ,

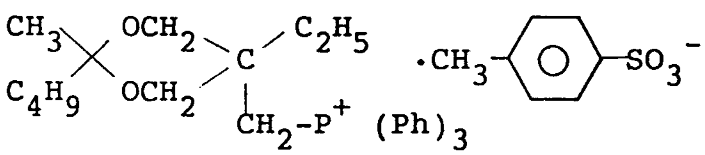 ,

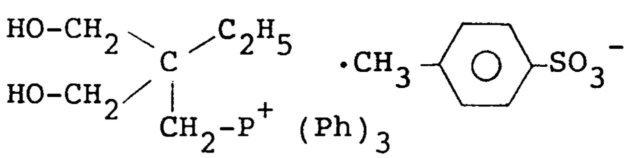 ,

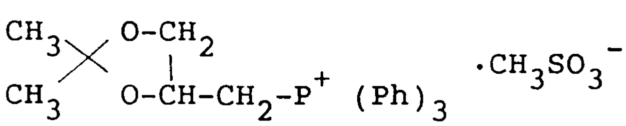 ,

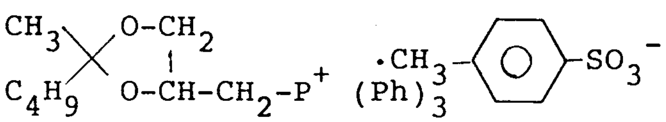 , and

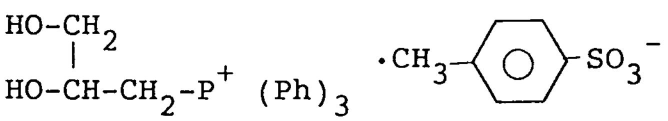 .

These quaternary phosphonium compounds can be used singly or in the form of a mixture of two or more thereof.

In many cases, a quaternary phosphonium group is introduced through the acetal or ketal in the quaternary phosphonium compound. Accordingly, to simplify the process of the preparation of the copolymer component, preferably the acetal or ketal is used as the copolymer component without being

hydrolyzed.

For copolymerization of the quaternary phosphonium compound, the quaternary phosphonium compound can be added at an optional stage before completion of the synthesis of the polyester. For example, the quaternary phosphonium compound can be added to the polyester-forming starting materials before initiation of the first stage reaction, or during the period of from a termination of the first stage reaction to an initiation of the second stage reaction, or during the second stage reaction. If the addition is too delayed, however, a depolymerization by the quaternary phosphonium compound is caused and the polymerization degree is reduced, and thus the polymerization must be conducted again, and therefore, the polymerization time is prolonged, with the result that the process becomes economically disadvantageous. Accordingly, preferably the quaternary phosphonium compound is added during the period of from the point of termination of the first stage reaction to the initial stage of the second stage reaction (before the intrinsic viscosity arrives at 0.2), whereby a polyester having a reduced degree of coloration can be easily obtained.

If the polymerization degree of the acid dye-dyeable polyester of the present invention prepared by any of the above-mentioned processes is too low, for example, the mechanical properties of a shaped article, such as a fiber, formed from the polyester, are poor. Accordingly, preferably the intrinsic viscosity (as measured at 35°C in o-chlorophenol) is at least 0.3, especially 0.4 to 1.0.

Optional additives such as a dye, a pigment, a dulling agent, a coloration-preventing agent, a flame retardant, an antioxidant, an antistatic agent and inorganic particles can be added to the polyester of the present invention according to need.

The acid dye-dyeable polyester of the present invention is advantageous over the conventional polyesters in that the coloration is reduced, and if the polyester of the present invention is formed into a fiber and is then dyed with an acid dye, the fiber can be dyed in a very beautiful hue. Presumably, because the dyeability-imparting agent of the present invention has an excellent affinity with a polyester and an excellent affinity with an acid dye, although a fixing treatment should be carried out in case of a nylon fiber after dyeing with an acid dye, in the case of the polyester of the present invention, staining (falling or migration of the dye at washing) is not caused even without performing a fixing treatment.

The dyeability-imparting agent used in the present invention can be prepared by using general-purpose starting materials, and has an excellent heat resistance and light resistance. Moreover, in the dyeability-imparting agent, coloration can be controlled to a very low level under melt-polymerization temperature conditions adopted for the production of ordinary polyethylene terephthalate. Accordingly, the dye-ability-imparting agent is advantageous in that a high-quality polyester dyeable with an acid dye can be obtained at a low cost.

The present invention will now be described in detail with reference to the following examples that by no means limit the scope of the invention. In the examples, all of "parts" are by weight. The properties mentioned described below were evaluated according to the following methods.

(1) Intrinsic viscosity [$\eta$]

The sample was dissolved in o-chlorophenol and the intrinsic viscosity was measured at 35°C by an Ostwald viscometer.

(2) Polymer color

The polymer color was determined according to JIS Z-8722.

(3) Haze value of polymer

Between two cover glass sheets for a microscope, 20 mg of the sample polymer was placed and heat-softened on a hot plate at 280°C. Then, the polymer was pressed to a circular shape having a diameter of about 10 mm and immediately immersed in ice water together with the cover glass sheets to quench the sample. The obtained sample (having no air bubbles) for the measurement of the haze value was subjected to the measurement according to the white plate method-using an integral ball type opacity meter.

(4) Dye absorption

The solution left after dyeing was subjected to the colorimetry.

(5) Dyeing treatment

Dyeing with an acid dye was carried out under conditions shown in Table 1.

Table 1

| | | | |
|---|---|---|---|
| Dye | Alizarine Light Blue AA | | 22%o.w.f. |
| pH of dying solution | 3 | acetic acid<br>$Na_2SO_4$ | 3 ml/liter<br>3 g/liter |
| Bath ratio | 1:100 | | |
| Dyeing temperature | 130°C | | |
| Dyeing time | 60 minutes | | |

(6) Light fastness

A dyed fabric was irradiated by a xenon-arc lamp, and the light fastness was evaluated based on the color degradation by using a blue scale.

(7) Dyeing fastness (non-staining property)

The dyeing fastness was determined according to Method A of JIS L-0846.

(8) Dyeing fastness (dry cleaning resistance)

The dyeing fastness was determined according to JIS L-0860.

Referential Example 1 (Synthesis of Dyeability-Imparting Agent)

Decane-diol was reacted with methane-sulfonic acid chloride in pyridine, and the obtained reaction product was sufficiently washed with water, dried at a low temperature and recrystallized from acetone to obtain a disulfonic acid ester represented by the following formula:

$CH_3$-$SO_3$-$(CH_2)_{10}$-$O_3S$-$CH_3$

The obtained disulfonic acid ester compound was reacted with triphenylphosphine at 130°C for 2 hours and then at 160°C for 30 minutes to obtain a quaternary phosphonium compound A represented by the following formula:

$(Ph)_3P^+$-$(CH_2)_{10}$-$P^+(Ph)_3 \cdot (CH_3$-$SO_3^-)_2$

Referential Example 2 (Synthesis of Dyeability-Imparting Agent)

In a petroleum ether solvent, 100 parts of trimethylolpropane was subjected to dehydrogenation reaction with 200 parts of cyclohexanone in the presence of p-toluene-sulfonic acid as the catalyst to obtain cyclohexanone-ketal represented by the following formula:

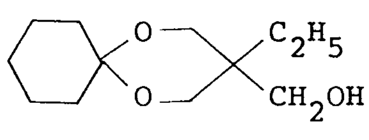

This ketal was dissolved in 300 ml of pyridine and reacted with 160 parts of p-toluene-sulfonic acid chloride at 20 to 25°C to obtain a p-toluene-sulfonic acid ester of the above-mentioned compound. The obtained product was washed with water, dried at a low temperature and recrystallized from methanol.

Then, 270 parts of triphenylphosphine was added to 250 parts of the obtained ester and a reaction was carried out at 130°C for 2 hours and at 160°C for 1 hour. From the IR absorption spectrum, it was

confirmed that the obtained product was a quaternary phosphonium compound B having the following structure:

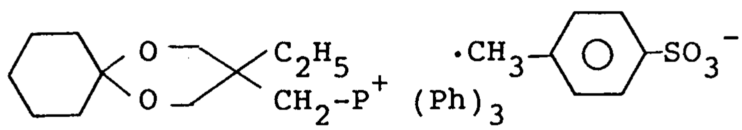 .

## Example 1

A glass flask was charged with 100 parts of dimethyl terephthalate, 70 parts of ethylene glycol and 0.02 part of manganese acetate tetrahydrate, and the temperature was elevated to 230°C from 140°C in a nitrogen gas atmosphere over a period of 4 hours and ester exchange reaction was carried out while removing methanol formed by the reaction by distillation. Then, 0.02 part of phosphoric acid was added and 0.05 part of antimony trioxide was further added, and the entire mixture was transferred into a polymerization flask. Then, the pressure was gradually reduced from 760 mmHg while gradually elevating the temperature to 275°C from 230°C, whereby polycondensation was effected. When the intrinsic viscosity of the polyester reached 0.3, the quaternary phosphonium compound A synthesized in Referential Example 1 was added as the dyeability-imparting agent in an amount of 4.27 parts ($5 \times 10^{-3}$ mole per 100 g of the obtained polyester). Furthermore, reaction was carried out at 275°C under 0.5 mmHg for 1 hour to obtain a polymer having a very good whiteness, and having a polymer color value L of 78 and a value b of 2.3.

The obtained polymer was formed into chips, and according to customary procedures, the chips were melt-spun at a spinning temperature of 280°C to obtain an undrawn yarn. The undrawn yarn was drawn at a draw ratio of 4.5 to obtain a 75-denier/24-filament multifilament yarn.

The drawn yarn was formed into a knitwork, and when the knitwork was dyed under the above-mentioned dyeing conditions, the dye absorption was 100% and the dyeability with an acid dye was very good. The results of evaluation of the dyed fabric are shown in Table 2.

When dyeing was carried out at 130°C for 1 hour by using a cationic dye (Aizen Cathilon Pink FGH 2%owf) instead of the acid dye, the fabric was not substantially dyed but only stained.

## Examples 2 through 7 and Comparative Examples 1 through 3

The experiment was carried out in the same manner as described in Example 1 except that a quaternary phosphonium compound shown in Table 2 was used instead of the quaternary phosphonium compound used in Example 1 (in Comparative Examples 1 through 3, the amount of the dyeability-imparting agent was doubled based on the mole to thus equalize the quantity of the phosphonium cationic group). The results are shown in Table 2.

Table 2

| | Quaternary Phosphonium Compound* | Haze Value of Polymer | Acidic Dye Absorption (%) | Fastness | | |
|---|---|---|---|---|---|---|
| | | | | light resistance (class) | non-staining property (class) | dry cleaning resistance (class) |
| Example 1 | (a) | 3 | 100 | 5 | 5 | 5 |
| Example 2 | (b) | 45 | 92 | 4 - 5 | 5 | 5 |
| Example 3 | (c) | 5 | 100 | 5 | 5 | 5 |
| Example 4 | (d) | 2 | 100 | 5 | 5 | 5 |
| Example 5 | (e) | 37 | 87 | 5 | 5 | 5 |
| Example 6 | (f) | 44 | 91 | 4 - 5 | 5 | 5 |
| Example 7 | (g) | 48 | 100 | 4 - 5 | 5 | 5 |
| Comparative Example 1 | (h) | examination stopped because of drastic degradation of polymerization degree | | | | |
| Comparative Example 2 | (i) | opaque | 48 | 3 - 4 | 3 - 4 | 3 - 4 |
| Comparative Example 3 | (j) | 10 | 90 | 4 | 4 | 4 |

The quaternary phosphonium compounds (a) through (j) shown in Table 2 are as follows:

(a): $Ph_3P(CH_2)_{10}PPh_3 \cdot (OMs)_2$

(b): $Ph_3P(CH_2)_{10}PPh_3 \cdot (OTs)_2$

(c): $Bu_3P(CH_2)_{10}PBu_3 \cdot (OMs)_2$

(d): $Ph_3P(CH_2)_{12}PPh_3 \cdot (OMs)_2$

(e): $Bu_3P(CH_2)_6PBu_3 \cdot (OMs)_2$

(f): $Ph_3P(CH_2)_4PPh_3 \cdot (OTs)_2$

(g): $Ph_3P(CH_2)_{16}PPh_3 \cdot (OTs)_2$

(h): $Ph_4P \cdot C1$
(i): $Ph_3PCH_3 \cdot (OTs)$
(j): $Ph_3P(CH_2)_{17}CH_3 \cdot (OMs)$

In the above formulae, OMs represents a methanesulfonic acid residue, and OTs represents a paratoluene-sulfonic acid residue.

Example 8

A glass flask was charged with 100 parts of dimethyl terephthalate, 200 parts of ethylene glycol and 0.02 part of manganese acetate tetrahydrate, the temperature was elevated to 230°C from 140°C in a nitrogen gas atmosphere over a period of 4 hours and an ester change reaction was carried out while removing methanol formed by the reaction by distillation. Then, 0.02 part of phosphoric acid was added, 0.05 part of antimony trioxide was further added, and the entire mixture was transferred into a polymerization flask. Then, the quaternary phosphonium compound B synthesized in Referential Example 2 was added as the dyeability-imparting agent in an amount of 5 parts (1.5 mol% with respect to dimethyl terephthalate; $7.5 \times 10^{-3}$ mole per 100 g of the obtained polyester). The pressure was gradually reduced from 760 mmHg to 0.5 mmHg over 1 hour while gradually elevating the temperature to 275°C from 230°C over 1 hour, and the mixture was reacted at 275°C under 0.5 mmHg for further 1 hour to obtain a polymer having a very good whiteness, and having a polymer color value L of 78 and a value b of 3.0.

The obtained polymer was formed into chips, and according to customary procedures, the chips were melt-spun at a spinning temperature of 270°C to obtain an undrawn yarn. The undrawn yarn was drawn at a draw ratio of 4.5 to obtain a 75-denier/24-filament multifilament yarn.

The drawn yarn was formed into a knitwork, and when the knitwork was dyed under the above-mentioned dyeing conditions, the dye absorption was 92% and the dyeability with an acid dye was very good. When the resulting dyed fabric was washed together with an undyed nylon plain weave fabric in water at 60°C for 20 minutes, the nylon plain weave fabric was not stained.

Example 9

The procedure as described in Example 8 was repeated except that a quaternary phosphonium compound as shown below was used instead of the quaternary phosphonium compound used in Example 8.

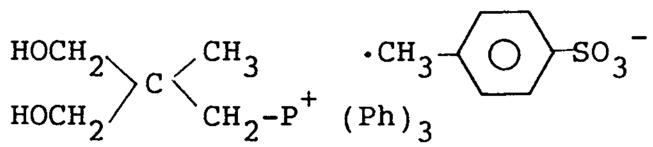

The obtained polymer had a value L of 74, a value b of 4.0, and an intrinsic viscosity [η] of 0.58. The dye absorption was 91% and the washing resistance of the dyed fabric was good.

Comparative Example 4

The procedure as described in Example 8 was repeated except that a quaternary phosphonium compound as shown below was used instead of the quaternary phosphonium compound used in Example 8.

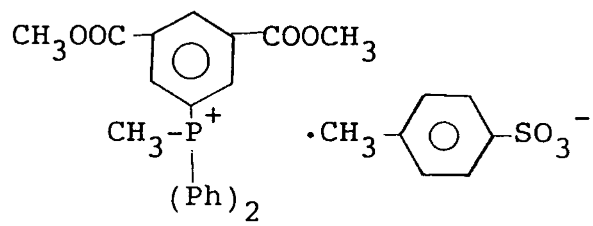

The obtained polymer was colored in brown and had a value L of 68 and a value b of 12.0. The dye absorption was 63%, and thus had a poor dyeability with an acid dye.

Example 10

The procedure as described in Example 8 was repeated except that a quaternary phosphonium compound as shown below was used as the quaternary phosphonium compound in an amount of 3.0 mol% with respect to dimethyl terephthalate (1.46 x $10^{-3}$ mole per 100 g of the obtained polyester).

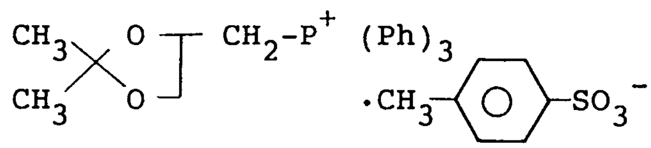

The obtained polymer had a value L of 70 and a value b of 2.2, i.e., had a good color shade. The intrinsic viscosity [η] was 0.61, i.e., had a good copolymerization reactivity. Further, the dye absorption was 88%, i.e., had a good dyeability.

Example 11

The procedure as described in Example 8 was repeated except that a quaternary phosphonium compound of the formula,

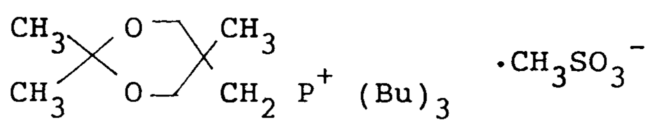

was used as the quaternary phosphonium compound to obtain a polyester having a value L of 74, a value b of 3.5 and an intrinsic viscosity [η] of 0.57.

The obtained polyester had a good dyeability with an acid dye. When the polyester was dyed under the above-mentioned dyeing conditions except that 5% o.w.f. of Alizarine Light Blue AA was used as the dye, the dye absorption was 90%. The resulting dyed fabric had a good resistance to staining and no migration of the dye was observed.

Examples 12 through 16

The procedure as described in Example 8 was repeated except that a quaternary phosphonium compound of the formula,

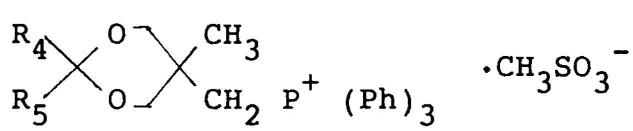

in which $R_4$ and $R_5$ are as defined in Table 3 below, was used as the quaternary phosphonium compound, and 5% o.w.f. of Alizarine Light Blue AA was used as the acid dye. The results are shown in Table 3.

Table 3

| Example No. | $R_4$ | $R_5$ | Color of Polymer | | [η] | Dye Absorption (%) |
|---|---|---|---|---|---|---|
| | | | L | b | | |
| 12 | H | $CH_3$ | 74 | 4.0 | 0.51 | 78 |
| 13 | $CH_3$ | $CH_3$ | 72 | 2.6 | 0.63 | 90 |
| 14 | $CH_3$ | $C_4H_9$ | 68 | 2.5 | 0.58 | 82 |
| 15 | $C_2H_5$ | $C_2H_5$ | 71 | 3.5 | 0.51 | 80 |
| 16 | $C_4H_9$ | $C_4H_9$ | 70 | 3.8 | 0.49 | 71 |

Example 17

The procedure as described in Example 8 was repeated except that the amount (mole per 100 g of the polyester) of the quaternary phosphonium compound was varied as shown in Table 4 below, and 5% o.w.f. of Alizarine Light Blue AA was used as the acid dye. The results are shown in Table 4.

Table 4

| Run No. | Quaternary Phosphonium Compound | Color of Polymer | | [η] | Dye Absorption (%) |
|---|---|---|---|---|---|
| | | L | b | | |
| 1 | $2.6 \times 10^{-4}$ | 75 | 2.2 | 0.60 | 45 |
| 2 | $1.0 \times 10^{-3}$ | 75 | 2.3 | 0.61 | 63 |
| 3 | $5.0 \times 10^{-3}$ | 73 | 3.3 | 0.62 | 95 |
| 4 | $2.3 \times 10^{-2}$ | 70 | 4.2 | 0.55 | 100 |
| 5 | $3.5 \times 10^{-2}$ | 65 | 4.8 | 0.50 | 90 |
| Note: Run No. 1 is a comparative example. | | | | | |

Example 18

The procedure as described in Example 8 was repeated except that a glycol as shown in Table 5 below was used instead of ethylene glycol, tetrabutyl titanate was used as the ester change and polymerization catalyst in an amount of 0.08 part (40 mmol% with respect to terephthalic acid, and a quaternary phosphonium compound of the formula,

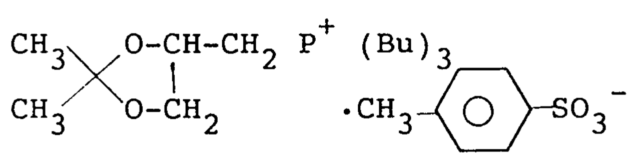

was used as the quaternary phosphonium compound in an amount of 2.5 mol% with respect to dimethyl terephthalate (1 to $1.1 \times 10^{-2}$ mole per 100 g of the obtained polyester). The final reaction temperature was varied depending on the glycol used. The results are shown in Table 5.

Table 5

| Run No. | Glycol Component | Polymerization Temp. (°C) | Color of Polymer | | [η] | Dye Absorption (%) |
|---|---|---|---|---|---|---|
| | | | L | b | | |
| 1. | tetramethylene glycol | 240 | 78 | 1.5 | 0.51 | 80 |
| 2. | cyclohexane dimethanol/ethylene glycol (50/50) | 285 | 69 | 3.3 | 0.58 | 88 |

## Claims

**1.** A polyester dyeable with an acid dye, which comprises an aromatic dicarboxylic acid as the main acid component and an aliphatic diol and/or an alicyclic glycol as the main glycol component, wherein units of a quaternary phosphonium base represented by the following formula (I) is incorporated in an amount of $5 \times 10^{-4}$ to $5 \times 10^{-2}$ mole per 100 g of the polyester:

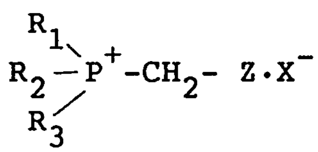

(I)

wherein $R_1$, $R_2$ and $R_3$ may be the same or different and each represents a hydrocarbon group, Z represents $-R_4-CH_2-\overset{+}{P}R_1R_2R_3 \cdot X^-$ in which $R_1$, $R_2$ and $R_3$ are as defined above, and $R_4$ represents a hydrocarbon group having 2 to 14 carbon atoms, or a hydrocarbon group having 2 to 5 carbon atoms, which is bonded to the polyester through at least one ester bond, and $X^-$ represents a sulfonate anion.

**2.** A polyester as claimed in claim 1, wherein the aromatic dicarboxylic acid is selected from the group consisting of terephthalic acid, isophthalic acid, orthophthalic acid, 2,6-naphthalene-dicarboxylic acid, 2,7-naphthalene-dicarboxylic acid, 2,5-naphthalene-dicarboxylic acid, 1,5-naphthalene-dicarboxylic acid, 4,4'-diphenyl-dicarboxylic acid, 3,3'-diphenyl-dicarboxylic acid, 4,4'-diphenylether-dicarboxylic acid, 4,4'-diphenylmethane-dicarboxylic acid, 4,4'-diphenylsulfone-dicarboxylic acid and 1,2-bis(phenoxy)-ethane-4,4'-dicarboxylic acid.

**3.** A polyester as claimed in claim 1, wherein the aliphatic diol compound is selected from the group consisting of ethylene glycol, propane-diol, butane-diol, hexane-diol, neopentyl glycol, 2-methyl-1,3-propane-diol, diethylene glycol and triethylene glycol.

**4.** A polyester as claimed in claim 1, wherein the alicyclic diol compound is selected from the group consisting of 1,4-cyclohexane-diol and 1,4-cyclohexane-dimethanol.

**5.** A polyester as claimed in claim 1, wherein the unit having a quaternary phosphonium base is based on a quaternary phosphonium compound selected from those represented by the following formula (II) and is incorporated in the polyester.

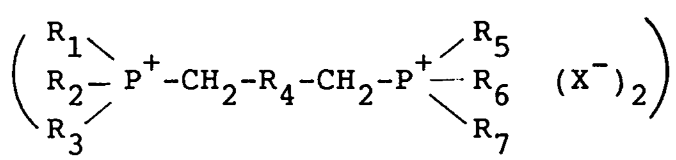

(II)

wherein $R_1$, $R_2$, $R_3$, $R_5$, $R_6$ and $R_7$ may be the same or different and each represents a monovalent hydrocarbon group having 4 to 10 carbon atoms, $R_4$ represents a divalent hydrocarbon group having 2 to 14 carbon atoms, and $X^-$ represents a sulfonate anion.

**6.** A polyester as claimed in claim 5, wherein the quaternary phosphonium compound is selected from the

group consisting of
$Ph_3P^+(CH_2)_{10}P^+Ph_3 \bullet (CH_3SO_3^-)_2$ ,
$Bu_3P^+(CH_2)_{10}P^+Bu_3 \bullet (CH_3SO_3^-)_2$ , and
$Ph_3P^+(CH_2)_{12}P^+Ph_3 \bullet (CH_3SO_3^-)_2$ .

**7.** A polyester as claimed in claim 1, wherein the unit having a quaternary phosphonium base is based on a quaternary phosphonium compound selected from those represented by the following formulae (III) and (IV) and is copolymerized in the polyester.

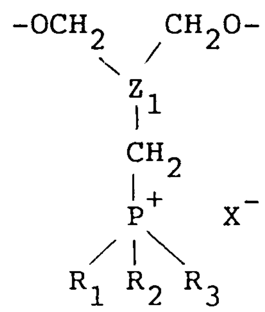

(III)

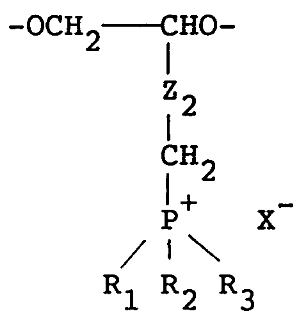

(IV)

wherein $Z_1$ represents a trivalent saturated hydrocarbon group having 1 to 3 carbon atoms, $Z_2$ represents a divalent saturated hydrocarbon group having 1 to 3 carbon atoms or a direct bond, $R_1$ , $R_2$ and $R_3$ represent a hydrocarbon group having 1 to 6 carbon atoms, and $X^-$ represents a sulfonate anion.

**8.** A polyester as claimed in claim 7, wherein the quaternary phosphonium compound is selected from the group consisting of

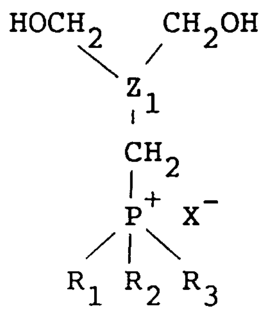

(V)

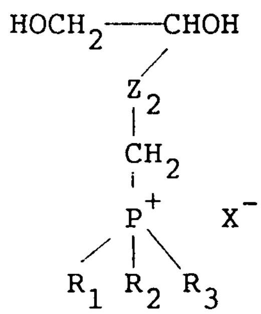

(VI)

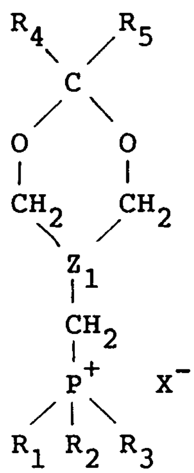

(VII), and

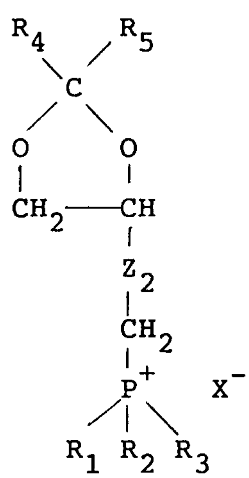

(VIII)

wherein $Z_1$ , $Z_2$ , $R_1$ , $R_2$ , $R_3$ and $X^-$ are as defined above and $R_4$ and $R_5$ represent a hydrogen

atom or a hydrocarbon group having 1 to 4 carbon atoms, with the proviso that at least one of them is the hydrocarbon group, or $R_4$ and $R_5$ are alkylene group having 4 to 8 carbon atoms, which are bonded together to form a 5- to 7-membered ring.

9. A polyester as claimed in claim 8, wherein the quaternary phosphonium compound is selected from the group consisting of

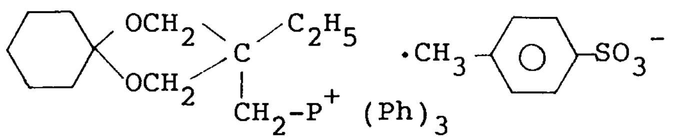 ,

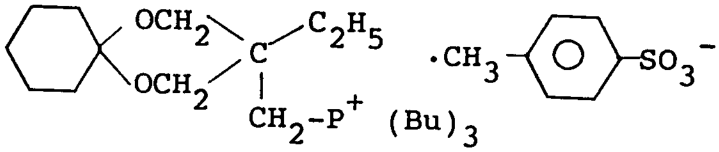
,

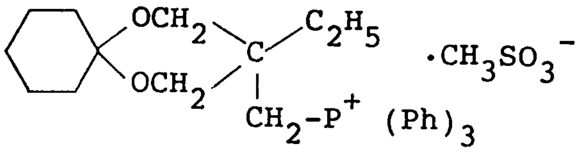
,

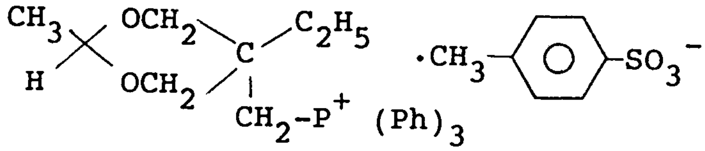
,

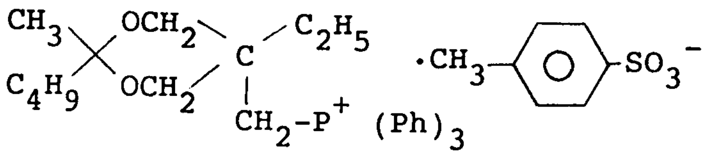
,

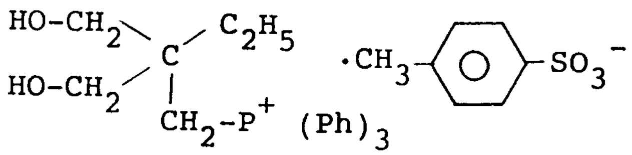
,

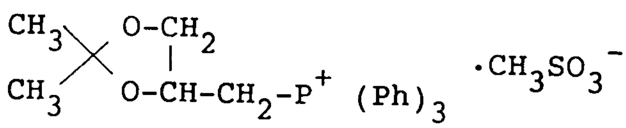
,

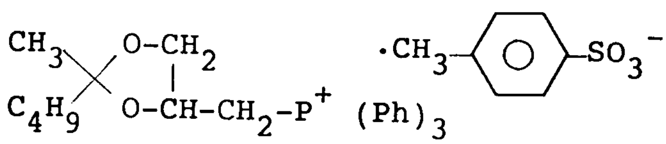
, and

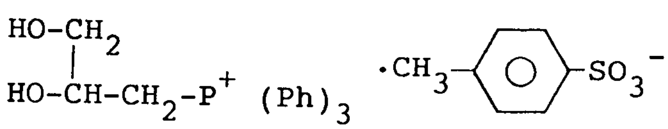
.

**10.** A process for the preparation of a polyester dyeable with an acid dye, which comprises forming the polyester by using an aromatic dicarboxylic acid and/or an ester-forming derivative thereof as the main acid component and an aliphatic diol and/or an alicyclic glycol and/or an ester-forming derivative thereof as the main glycol component, wherein a quaternary phosphonium compound represented by the following formula (V) and/or (VI) is added in an amount of $5 \times 10^{-4}$ to $5 \times 10^{-2}$ mole per 100 g of the obtained polyester before completion of the polyester forming reaction, and then the reaction is completed.

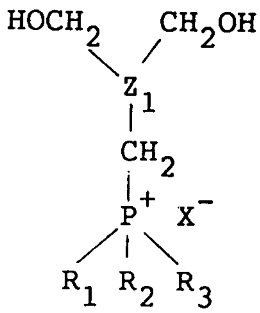

(V)

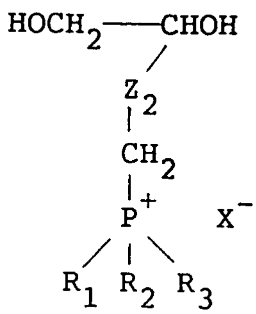

(VI)

wherein $Z_1$ represents a trivalent saturated hydrocarbon group having 1 to 3 carbon atoms, $Z_2$ represents a divalent saturated hydrocarbon atom having 1 to 3 carbon atoms or a direct bond, $R_1$, $R_2$ and $R_3$ may be the same or different and each represents a hydrocarbon group having 1 to 6 carbon atoms, and $X^-$ represents a sulfonate anion.

**11.** A process for the preparation of a polyester dyeable with an acid dye, which comprises forming the polyester by using an aromatic dicarboxylic acid and/or an ester-forming derivative thereof as the main acid component and an aliphatic diol and/or an alicyclic glycol and/or an ester-forming derivative thereof as the main glycol component, wherein a quaternary phosphonium compound represented by the following formula (VII) and/or (VIII) is added in an amount of $5 \times 10^{-4}$ to $5 \times 10^{-2}$ mole per 100 g of the obtained polyester before completion of the polyester forming reaction, and then the reaction is completed.

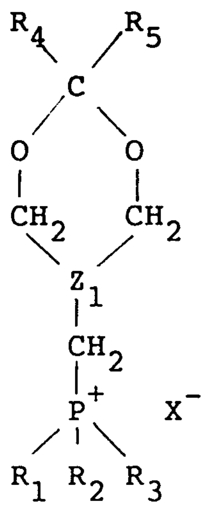

(VII)

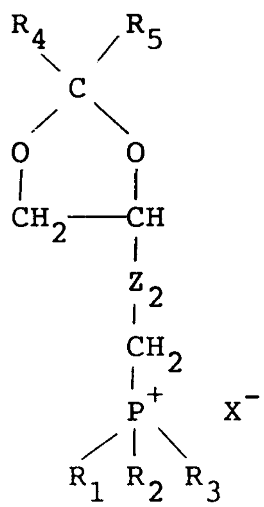

(VIII)

wherein $Z_1$ represents a trivalent saturated hydrocarbon group having 1 to 3 carbon atoms, $Z_2$ represents a divalent saturated hydrocarbon atom having 1 to 3 carbon atoms or a direct bond, $R_1$, $R_2$ and $R_3$ may be the same or different and each represents a hydrocarbon group having 1 to 6 carbon atoms, $R_4$ and $R_5$ represent a hydrogen atom or a hydrocarbon group having 1 to 4 carbon atoms, with the proviso that at least one thereof is the hydrocarbon group, or $R_4$ and $R_5$ are alkylene group having 4 to 8 carbon atoms, which are bonded together to form a 5- to 7-membered ring, and $X^-$ represents a sulfonate anion.